# EUROPÄISCHE PATENTSCHRIFT

(11) **EP 3 119 596 B1**
(45) Veröffentlichungstag und Bekanntmachung des Hinweises auf die Patenterteilung: **18.08.2021**
(21) Anmeldenummer: 15700473.0
(22) Anmeldetag: 16.01.2015
(51) Int. Cl.: B29C 73/16, F04B 49/16, F04B 35/06, F04B 35/04, B29L 30/00

(54) **VORRICHTUNG ZUM ABDICHTEN UND AUFPUMPEN AUFBLASBARER GEGENSTÄNDE**
DEVICE FOR SEALING AND INFLATING INFLATABLE ARTICLES
DISPOSITIF PERMETTANT D'ÉTANCHÉIFIER ET DE GONFLER DES GONFLABLES

(30) Priorität: 19.03.2014 DE 102014205071
(43) Veröffentlichungstag der Anmeldung: 25.01.2017
(73) Patentinhaber: Continental Reifen Deutschland GmbH, 30165 Hannover (DE)
(72) Erfinder: ZAUM, Christopher, 30926 Seelze (DE); DETERING, Rainer, 31535 Neustadt am Rbge. (DE)
(74) Vertreter: Continental Corporation
(86) Internationale Anmeldenummer: PCT/EP2015/050723
(87) Internationale Veröffentlichungsnummer: WO 2015/139855

(56) Entgegenhaltungen:
- EP-A1- 2 058 112
- DE-A1- 19 850 269

## Beschreibung

Die Erfindung betrifft eine Vorrichtung zum Abdichten und Aufpumpen aufblasbarer Gegenstände, insbesondere zum Abdichten und Aufpumpen von Kraftfahrzeugreifen, wobei die Vorrichtung als Druckgasquelle eine Kompressoreinheit aufweist, welche als über ein Schubkurbelgetriebe angetriebener Hubkolbenverdichter ausgebildet ist und einen in einem Zylinder oszillierend bewegten Kolben aufweist, und wobei Kolben und Zylinder einen Kompressionsraum begrenzen und der Zylinder ausgangsseitig durch einen Zylinderkopf mit Auslassventil verschlossen ist.

Solche Vorrichtungen zum Abdichten und Aufpumpen aufblasbarer Gegenstände werden insbesondere für so genannte Pannensets benötigt, die an Stelle eines Reservereifens im Kraftfahrzeug mitgeführt und angeordnet sind. Ein Beispiel für eine derartige Vorrichtung ist der Patentanmeldeschrift EP 2 058 112 A1 offenbart.

Bei solchen Pannensets zur temporären Reparatur von Reifenpannen, bei denen die Kompressoreinheiten, d.h. die Luftkompressoren zum Auffüllen eines beschädigten Reifens üblicherweise über eine Ventil- und Verteilereinheit für Dichtmittel und Druckgas mit dem zu reparierenden Reifen verbunden sind, weist die Ventil- und Verteilereinheit auch ein Anschlussstück zum Anschluss einer Dichtmittelflasche auf. Zur Abdichtung des beschädigten Reifens wird nun das Dichtmittel durch den Luftkompressor über die Ventil- und Verteilereinheit in den Reifen gefördert und danach der Reifen durch den Luftkompressor bis zu einem bestimmten Minimaldruck aufgepumpt.

Die Kompressoreinheiten, d.h. die Luftkompressoren werden üblicherweise zu Teilen oder vollständig aus Kunststoff o.ä. kostengünstigen Materialien gefertigt. Eine der wichtigsten technischen Herausforderungen bei dieser Fertigungsweise ist es, dass die eingesetzten Materialien eine begrenzte und im Vergleich zu einem Metall eine geringere Temperaturbeständigkeit sowie ein geringes Wärmeleitvermögen aufweisen.

Ohne Implementierung besonderer Schutzmaßnahmen kann die durch die Verdichtung / den Kompressionsvorgang verursachte Erwärmung des Luftkompressors zu einer thermischen Überlastung von Systemkomponenten führen. Dies ist insbesondere bei einer längeren ununterbrochenen Nutzung der Fall. Eine thermische Überlastung tritt hierbei bevorzugt auf, wenn der Kompressor nahe seiner mechanischen oder elektrischen Belastungsgrenze arbeitet, wenn er z.B. über längere Zeit gegen Maximaldruck pumpt, wenn etwa Luft und viskoses Dichtmittel durch das Reifenventil in den Reifen gefördert werden.

Um in allen Betriebszuständen eine solche Überlastung zu verhindern, werden im Stand der Technik besonders gefährdete Systemkomponenten, wie z.B. der Zylinderkopf bei einem als Hubkolbenverdichter ausgebildeten Luftkompressor aus Metall gefertigt. Dieses Verfahren führt jedoch zu deutlich erhöhten Produktionskosten.

Eine andere Möglichkeit besteht darin, die Leistung des Kompressors permanent zu begrenzen. Dieses Verfahren führt jedoch zu bezogen auf die Anwendung zu überdimensionierten Luftkompressoren und erhöht also auch deutlich die Produktionskosten.

Ebenso ist es möglich, die Temperatur gefährdeter Systemkomponenten durch eine aktive Kühlung, z.B. durch Lüfter zu begrenzen. Aufgrund der geringen thermischen Leitfähigkeit ist dieses Verfahren jedoch bei Kunststoffbauteilen nur bedingt einsetzbar. Die Patentanmeldeschrift DE 198 50 269 A1 offenbart einen Gasverdichter für einen Antriebsmotor eines Fahrzeugs. Dieser Gasverdichter weist einen zuschaltbaren Hilfstotraum und einen weiteren zuschaltbaren Zusatzraum auf, wobei die beiden Räume getrennt voneinander mit dem Verdichtungsraum des Gasverdichters in Verbindung gebracht werden können.

Für die Erfindung bestand daher die Aufgabe, eine Vorrichtung zum Abdichten und Aufpumpen aufblasbarer Gegenstände bereitzustellen, bei der im Betrieb die Leistungsfähigkeit eines Luftkompressor temporär begrenzt wird, um damit eine Überhitzung wichtiger Systemkomponenten zu verhindern, wobei gleichzeitig jedoch in Betriebszuständen mit geringer thermischer Belastung eine hohe Kompressorleistung zur Verfügung stehen soll.

Gelöst wird diese Aufgabe durch die Merkmale des Hauptanspruchs. Weitere vorteilhafte Ausbildungen sind in den Unteransprüchen offenbart.

Dabei ist der Hubkolbenverdichter mit einem variablen Totluftvolumen versehen ist, dessen Inhalt abhängig von der Temperatur des Zylinderkopfes veränderbar ist.

Die erfindungsgemäße Ausbildung ermöglicht also eine Begrenzung und Steuerung der Leistungsfähigkeit und darüber auch der Temperatur einer Kompressoreinheit bzw. eines als Hubkolbenverdichter ausgebildeten Luftkompressors durch ein variabel veränderbares bzw. zuschaltbares Totluftvolumen.

Mithilfe der erfindungsgemäßen Ausbildung lässt sich ein hocheffizienter Kompressor aus Kunststoff realisieren, der zum Schutz gegen Überlast eine thermo-automatische Leistungsregelung enthält. Die Erhöhung der Stückkosten durch die hierzu notwendigen Einrichtungen oder Regelung ist im Vergleich zu einem typischen Dichtmittelkompressor aus Metall sehr gering. Die Erfindung ist für jede Art von Kolbenmaschine anwendbar.

Eine vorteilhafte Weiterbildung besteht darin, dass die Vorrichtung weiterhin einen Behälter für ein in den aufblasbaren Gegenstand einfüllbares selbsttätiges Dichtmittel und eine den Behälter und die Kompressoreinheit verbindende Ventil- und Verteilereinheit für Dichtmittel und Druckgas mit einer an den aufblasbaren Gegenstand anschließbaren Leitung aufweist. Damit ist die erfindungsgemäße Ausbildung für ein kompaktes Pannenset verwendbar, bei dem alle erforderlichen Einrichtungen in einem Set angeordnet und für den Nutzer mit wenigen Handgriffen bedienbar ist.

Eine weitere vorteilhafte Ausbildung besteht darin, dass das Totluftvolumens durch einen mit dem Kompressionsraum verbundenen Druckraum bereitgestellt wird, dessen Inhalt abhängig von der Temperatur des Zylinderkopfes veränderbar ist. Damit lässt sich das Totluftvolumen unabhängig von Form und Ausbildung des Kompressionsraums gestalten. Dies ist insbesondere in Verbindung mit einer weiteren vorteilhaften Ausbildung der Fall, die darin besteht, dass der weitere Druckraum in Form eines zweiten Zylinders ausgebildet ist, in dem ein geführter, temperaturabhängig verschiebbarer Kolbenschieber angeordnet ist.

Unter anderem kann die Steuerung des so bereitgestellten Totluftvolumens auch elektronisch erfolgen, etwa mit Hilfe eines Temperatursensors, eines elektronischen Regelelements, oder auch durch einen elektromechanischen Aktuator. Die Steuerung des Totluftvolumens kann auch durch eine zentrale Kontrolleinheit in Abhängigkeit des momentanen Betriebszustands des Luftkompressors erfolgen.

Eine weitere vorteilhafte Ausbildung besteht darin, dass der Kolbenschieber durch einen Aktuator aus einer Formgedächtnislegierung betätigbar ist. Damit wird eine leicht realisierbare Ausführung bereitgestellt, die dauerhaft ohne weitere Regelungsmaßnahmen und ohne Energiezufuhr für diese Steueraufgabe sicher funktioniert. Gleiches gilt für eine weitere vorteilhafte Ausbildung, die darin besteht, dass der Kolbenschieber durch einen mit Hilfe eines Thermobimetall-Elementes betätigten Aktuator verschiebbar ist. Mit der Größe dieses Totluftvolumens sowie der Auslegung der Formgedächtnislegierung kann dann die Reduktion der Kompressorleistung und die Schalttemperatur T₀ vorgewählt bzw. konstruktiv voreingestellt werden. Sinkt die Temperatur des Zylinderkopfes unter die Schalttemperatur T₀, so schließt z.B. der Kolbenschieber und der Kompressor kehrt wieder in seinen normalen Betriebszustand zurück.

Eine weitere vorteilhafte Ausbildung besteht darin, dass der Kolbenschieber durch einen elektrischen oder elektromechanischen Aktuator betätigbar ist, welcher durch eine über Temperatursensoren aktivierbare Kontrolleinheit gesteuert wird. Unter anderem kann die Veränderung, Steuerung oder Zuschaltung des so bereitgestellten Totluftvolumens dann z. B. elektronisch in bereits bestehende Systeme eingebunden werden. Die Steuerung des Totluftvolumens kann auch durch eine zentrale oder dezentrale Kontrolleinheit in Abhängigkeit des durch die zentrale Kontrolleinheit bestimmten, momentanen Betriebszustands des Luftkompressors erfolgen.

Eine weitere vorteilhafte Ausbildung besteht darin, dass der Inhalt des Totluftvolumens bzw. Druckraumes auf mindestens 5 % des Kompressionsraums bzw. Kompressionsvolumens vergrößert werden kann. Bei einem variablen Totluftvolumen von 10 % des Kompressionsvolumens kann der Volumenstrom um bis zu 40% und die Lufttemperatur um bis zu 70% reduziert werden, was natürlich auch zur gewünschten thermischen Entlastung des Zylinderkopfes beiträgt. Auch nimmt die elektrische Leistungsaufnahme des Kompressors bei aktivierten Totluftvolumen um bis zu 30% ab.

Eine weitere vorteilhafte Ausbildung besteht darin, dass das Druckgas gedämpft vom Kompressionsraum in den Druckraum, d.h. in das Totluftvolumen strömt, insbesondere durch eine pneumatische Drossel strömt. Damit können auch Druckspitzen aus dem den Kompressionsraum bildenden Zylinder abgedämpft werden.

Eine weitere vorteilhafte Ausbildung besteht darin, dass die Dämpfung dadurch erzeugt wird, dass der Kolbenschieber im zweiten Zylinder reibungsbehaftet verschoben wird, insbesondere dadurch, dass der Kolbenschieber mit zwischen Innenwand des zweiten Zylinder und Außenumfang des Kolbenschiebers angeordneten Dichtringen ausgebildet ist, die beim Verschieben eine Reibungsdämpfung erzeugen. Dadurch lässt es sich auf einfache Weise vermeiden, dass das Zuschalten des Totluftvolumens sich der Hubfrequenz des Kolbens nähert. Dies ist vorteilhaft, da die erwünschte Wirkung des "zugeschalteten" Totluftvolumens dann maximal ist, wenn dessen Inhalt während des gesamten Kolbenhubes annähernd konstant ist.

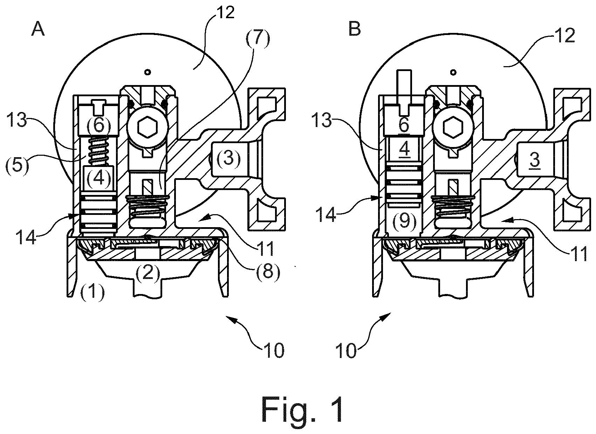

Eine weitere vorteilhafte Ausbildung besteht darin, dass die Dämpfung so erfolgt, dass die maximale Bewegungsfrequenz des Kolbenschiebers unter der Hubfrequenz des Kolbens liegt. Diese Auslegung verhindert ein unkontrolliertes Aufschwingen des Gesamt-Systems. Anhand eines Ausführungsbeispiels soll die Erfindung näher erläutert werden. Die Fig. 1 zeigt in Ausschnitten eine Vorrichtung zum Abdichten und Aufpumpen aufblasbarer Gegenstände, insbesondere zum Abdichten und Aufpumpen von Kraftfahrzeugreifen. Die Vorrichtung ist in zwei Schaltzuständen A und B gezeigt, auf der linken Seite der Fig. 1 einmal mit nicht zugeschaltetem Totluftvolumen (A) und einmal mit zugeschaltetem Totluftvolumen (B) auf der rechten Seite der Fig. 1.

Die Vorrichtung weist als Druckgasquelle eine Kompressoreinheit auf, welche als über ein Schubkurbelgetriebe angetriebener Hubkolbenverdichter 10 ausgebildet ist und einen in einem Zylinder 1 oszillierend bewegten Kolben 2 auf, wobei Kolben 2 und Zylinder 1 einen Kompressionsraum begrenzen und der Zylinder 1 ausgangsseitig durch einen Zylinderkopf 11 mit Auslassventil 7 verschlossen ist.

Die Vorrichtung weist weiterhin ein Manometer 12 und einen hier nicht näher dargestellten Behälter auf für ein in den aufblasbaren Gegenstand einfüllbares selbsttätiges Dichtmittel und eine den Behälter und die Kompressoreinheit verbindende Ventil- und Verteilereinheit für Dichtmittel und Druckgas mit einer an den aufblasbaren Gegenstand anschließbaren Leitung, wobei die Ventil- und Verteilereinheit den Betrieb der Vorrichtung wahlweise in den beiden Betriebsarten "Aufpumpen" und "Dichtmittel fördern" erlaubt. Die Ventil und Verteilereinheit ist üblicherweise an den Luftauslass 3 angeschlossen und in der Fig.1 ebenfalls nicht näher dargestellt.

Der Hubkolbenverdichter 10 ist mit einem variablen Totluftvolumen versehen, dessen Inhalt abhängig von der Temperatur des Zylinderkopfes veränderbar ist. Das variable Totluftvolumen wird in der gezeigten Ausführung durch eine zusätzliche Kammer, nämlich durch einen mit dem Kompressionsraum verbundenen Druckraum 9 bereitgestellt, dessen Inhalt veränderbar bzw. zuschaltbar ist. Im Kompressionsraum existiert nur ein geringes, bauartbedingtes Totluftvolumen 8 zwischen Kolben 2 und Zylinder 1. Durch eine periodische Kolbenbewegung wird nach dem bekannten Prinzip ein Luftstrom über das Auslassventil 7 durch den Luftauslass 3 befördert.

In diesem Betriebszustand wird die Effizienz des Kompressors nicht beeinträchtigt. Im Normalzustand liegt die also Temperatur des Zylinderkopfs unterhalb einer Schalttemperatur T₀.

Der Druckraum 9 ist in Form eines zweiten Zylinders 13 ausgebildet, in dem ein geführter verschiebbar beweglicher Kolbenschieber 4 angeordnet ist, der vom Aktuator 5 beaufschlagt ist. Die Einstellung bzw. Vorspannung des Aktuators 5 erfolgt mittels der Stelleinrichtung 6. Steigt nun durch eine anormal hohe Belastung des Kompressors die Zylinderkopftemperatur über die Schaltdrucktemperatur T₀ an, so reduziert sich die Länge des hier aus einer Formgedächtnislegierung (FGL) gefertigten Aktuators 5 und bewegt den Kolbenschieber 4, wie auf der rechten Seite der Fig. 1 gezeigt (B).

In der hier gezeigten Ausführung kann der Inhalt des Totluftvolumens bzw. Druckraumes 9 auf eine Größe/ein Volumen von 10% des Kompressionsraums bzw. Kompressionsvolumens vergrößert werden.

Die vorliegende Ausführung des Erfindungsgegenstandes beeinflusst oder steuert den Volumenstrom und damit rückwirkend die Temperatur des Luftkompressors also durch ein variables, zuschaltbares Totluftvolumen, in dem durch die Bewegung des Kolbenschiebers 4 eine zusätzliche, mit dem Zylinder verbundene Kammer bzw. ein zusätzlicher Druckraum 9 geöffnet wird.

Hierbei ist der Kolbenschiebers 4 und/oder die Zuleitung zu dem Schieber so ausgelegt, dass Druckspitzen aus dem Zylinder abgedämpft werden und keine Öffnung des Schiebers hervorrufen. Weiterhin ist die Dämpfung des Kolbenschiebers 4 so gewählt, dass die maximale Bewegungsfrequenz des Schiebers deutlich unter der Hubfrequenz des Kolbens liegt. Diese Auslegung verhindert ein unkontrolliertes Aufschwingen des Systems.

Zwischen Innenwand des zweiten Zylinder 13 und Außenumfang des Kolbenschiebers 4 sind hier reibungsbehaftete Dichtringen 14 angeordnet.

Die nun zum Kompressionszylinder 1 hin geöffnete Kammer, d.h. der Druckraum 9 dient als Totluftvolumen zur Leistungssteuerung des Kompressors. Bei z. B. einem variablen Totluftvolumen von 10% des Kompressionsvolumens kann in dem vorliegenden Beispiel die Auslasstemperatur um bis zu 70% reduziert werden. Auch nimmt die elektrische Leistungsaufnahme des Kompressors bei aktivierten Totluftvolumen um bis zu 30% ab.

Sinkt die Temperatur des Zylinderkopfes unter die Schalttemperatur T₀, so schließt der Kolbenschieber 4 und der Kompressor kehrt wieder in seinen normalen Betriebszustand zurück.

### Bezugszeichenliste

### (Teil der Beschreibung)

- 1: Zylinder/Kompressionszylinder
- 2: Kolben
- 3: Luftauslass
- 4: Kolbenschieber
- 5: Aktuators aus Formgedächtnislegierung (FGL)
- 6: Stelleinrichtung
- 7: Auslassventil
- 8: Minimales Totluftvolumen
- 9: Variables Totluftvolumen/Druckraum
- 10: Hubkolbenverdichter
- 11: Zylinderkopf
- 12: Manometer
- 13: Zweiter Zylinder
- 14: Reibungsbehaftete Dichtringe

## Patentansprüche

1. Vorrichtung zum Abdichten und Aufpumpen aufblasbarer Gegenstände, insbesondere zum Abdichten und Aufpumpen von Kraftfahrzeugreifen, wobei die Vorrichtung als Druckgasquelle eine Kompressoreinheit aufweist, welche als über ein Schubkurbelgetriebe angetriebener Hubkolbenverdichter (10) ausgebildet ist und einen in einem Zylinder (1) oszillierend bewegten Kolben (2) aufweist, wobei Kolben (2) und Zylinder (1) einen Kompressionsraum begrenzen und der Zylinder (1) ausgangsseitig durch einen Zylinderkopf (11) mit Auslassventil (7) verschlossen ist, **dadurch gekennzeichnet, dass** der Hubkolbenverdichter (10) mit einem variablen Totluftvolumen (9) versehen ist, dessen Inhalt abhängig von der Temperatur des Zylinderkopfes (11) veränderbar ist.

2. Vorrichtung nach Anspruch 1, die ein Manometer (12) und einen Behälter für ein in den aufblasbaren Gegenstand einfüllbares selbsttätiges Dichtmittel und eine den Behälter und die Kompressoreinheit verbindende Ventil- und Verteilereinheit für Dichtmittel und Druckgas mit einer an den aufblasbaren Gegenstand anschließbaren Leitung aufweist.

3. Vorrichtung nach Anspruch 1 oder 2, bei der das Totluftvolumens durch einen mit dem Kompressionsraum verbundenen Druckraum (9) bereitgestellt wird, dessen Inhalt abhängig von der Temperatur des Zylinderkopfes (11) veränderbar ist.

4. Vorrichtung nach einem der Anspruch 1 bis 3, bei der der weitere Druckraum (9) in Form eines zweiten Zylinders (13) ausgebildet ist, in dem ein geführter, temperaturabhängig verschiebbarer Kolbenschieber (4) angeordnet ist.

5. Vorrichtung nach Anspruch 4, bei dem der Kolbenschieber (4) durch einen Aktuator (5) aus einer Formgedächtnislegierung betätigbar ist.

6. Vorrichtung nach Anspruch 4, bei dem der Kolbenschieber (4) durch einen mit Hilfe eines Thermobimetall-Elementes betätigten Aktuator (5) verschiebbar ist.

7. Vorrichtung nach Anspruch 4, bei dem der Kolbenschieber (4) durch einen elektrischen oder elektromechanischen Aktuator (5) betätigbar ist, welcher durch eine über Temperatursensoren aktivierbare Kontrolleinheit gesteuert wird.

8. Vorrichtung nach einem der Ansprüche 1 bis 7, bei der der Inhalt des Totluftvolumens bzw. Druckraumes (9) auf mindestens 5 % des Kompressionsraums vergrößert werden kann.

9. Vorrichtung nach einem der Ansprüche 1 bis 8, bei der das Druckgas gedämpft vom Kompressionsraum in den Druckraum (9) strömt, insbesondere durch eine pneumatische Drossel strömt.

10. Vorrichtung nach Anspruch 9, bei der die Dämpfung dadurch erzeugt wird, dass der Kolbenschieber (4) im zweiten Zylinder (13) reibungsbehaftet verschoben wird, insbesondere dadurch, dass der Kolbenschieber (4) mit zwischen Innenwand des zweiten Zylinder (13) und Außenumfang des Kolbenschiebers (4) angeordneten Dichtringen (14) ausgebildet ist, die beim Verschieben eine Reibungsdämpfung erzeugen.

11. Vorrichtung nach Anspruch 9 oder 10, bei der die Dämpfung so erfolgt, dass die maximale Bewegungsfrequenz des Kolbenschiebers (4) unter der Hubfrequenz des Kolbens (2) liegt.

## Claims

1. Device for sealing and inflating inflatable objects, in particular for sealing and inflating motor vehicle tires, wherein the device has as a source of compressed gas a compressor unit, which is formed as a reciprocating piston compressor (10) driven by a slider crank mechanism and has a piston (2) moved in an oscillating manner in a cylinder (1), wherein the piston (2) and the cylinder (1) delimit a compression chamber and the cylinder (1) is closed on the output side by a cylinder head (11) with an outlet valve (7), **characterized in that** the reciprocating piston compressor (10) is provided with a variable dead air volume (9), the content of which can be varied depending on the temperature of the cylinder head (11).

2. Device according to Claim 1, which has a pressure gage (12) and a reservoir for an automatic sealant that can be filled into the inflatable object and a valve-and-distributor unit for sealant and compressed gas, which connects the reservoir and the compressor unit and has a line that can be connected to the inflatable object.

3. Device according to Claim 1 or 2, in which the dead air volume is provided by a pressure chamber (9) which is connected to the compression chamber and the content of which can be varied depending on the temperature of the cylinder head (11).

4. Device according to one of Claims 1 to 3, in which the further pressure chamber (9) takes the form of a second cylinder (13), arranged in which is a guided, temperature-dependently displaceable piston slide valve (4).

5. Device according to Claim 4, in which the piston slide valve (4) can be actuated by an actuator (5) of a shape memory alloy.

6. Device according to Claim 4, in which the piston slide valve (4) can be displaced by an actuator (5) that is actuated with the aid of a thermobimetal element.

7. Device according to Claim 4, in which the piston slide valve (4) can be actuated by an electrical or electromechanical actuator (5), which is controlled by a monitoring unit that can be activated by way of temperature sensors.

8. Device according to one of Claims 1 to 7, in which the content of the dead air volume or pressure chamber (9) can be increased to at least 5% of the compression chamber.

9. Device according to one of Claims 1 to 8, in which the compressed gas flows from the compression chamber into the pressure chamber (9) in a damped manner, in particular flows through a pneumatic restrictor.

10. Device according to Claim 9, in which the damping is produced by the piston slide valve (4) being frictionally displaced in the second cylinder (13), in particular by the piston slide valve (4) being formed with sealing rings (14) that are arranged between the inner wall of the second cylinder (13) and the outer circumference of the piston slide valve (4) and produce a frictional damping during the displacement.

11. Device according to Claim 9 or 10, in which the damping is performed such that the maximum movement frequency of the piston slide valve (4) is below the stroke frequency of the piston (2).

## Revendications

1. Dispositif permettant d'étanchéifier et de gonfler des objets gonflables, en particulier d'étanchéifier et de gonfler des pneumatiques de véhicule automobile, le dispositif présentant comme source de gaz sous pression une unité de compresseur qui est réalisée comme un compresseur à piston alternatif (10) entraîné par l'intermédiaire d'un mécanisme bielle-manivelle et qui présente un piston (2) déplacé de manière oscillante dans un cylindre (1), le piston (2) et le cylindre (1) délimitant une chambre de compression, et le cylindre (1) étant fermé côté sortie par une tête de cylindre (11) dotée d'une soupape de sortie (7),
**caractérisé en ce que** le compresseur à piston alternatif (10) est muni d'un volume mort d'air variable (9) dont la capacité est variable en fonction de la température de la tête de cylindre (11).

2. Dispositif selon la revendication 1 qui présente un manomètre (12), et un réservoir pour un produit d'étanchéité automatique pouvant être introduit dans l'objet gonflable, et une unité de soupape et de distribution reliant le réservoir et l'unité de compresseur, destinée à un produit d'étanchéité et un gaz sous pression, dotée d'une conduite pouvant être raccordée à l'objet gonflable.

3. Dispositif selon la revendication 1 ou 2, dans lequel le volume mort d'air est fourni par une chambre de pression (9) reliée à la chambre de compression et dont la capacité est variable en fonction de la température de la tête de cylindre (11).

4. Dispositif selon l'une quelconque des revendications 1 à 3, dans lequel l'autre chambre de pression (9) est réalisée sous la forme d'un deuxième cylindre (13) dans lequel est disposé un robinet à piston (4) guidé, déplaçable en fonction de la température.

5. Dispositif selon la revendication 4, dans lequel le robinet à piston (4) peut être actionné par un actionneur (5) composé d'un alliage à mémoire de forme.

6. Dispositif selon la revendication 4, dans lequel le robinet à piston (4) peut être déplacé par un actionneur (5) actionné à l'aide d'un élément thermique bilame.

7. Dispositif selon la revendication 4, dans lequel le robinet à piston (4) peut être actionné par un actionneur électrique ou électromécanique (5) qui est commandé par une unité de contrôle pouvant être activée par des capteurs de température.

8. Dispositif selon l'une quelconque des revendications 1 à 7, dans lequel la capacité du volume mort d'air ou de la chambre de pression (9) peut être augmentée jusqu'à au moins 5 % de la chambre de compression.

9. Dispositif selon l'une quelconque des revendications 1 à 8, dans lequel le gaz sous pression circule de manière amortie de la chambre de compression à la chambre de pression (9), en particulier à travers un étrangleur pneumatique.

10. Dispositif selon la revendication 9, dans lequel l'amortissement est produit en ce que le robinet à piston (4) est déplacé par friction dans le deuxième cylindre (13), en particulier en ce que le robinet à piston (4) est réalisé avec des bagues d'étanchéité (14) disposées entre la paroi intérieure du deuxième cylindre (13) et la circonférence extérieure du robinet à piston (4) et qui produisent un amortissement de friction au moment du déplacement.

11. Dispositif selon la revendication 9 ou 10, dans lequel l'amortissement est effectué de telle sorte que la fréquence de mouvement maximale du robinet à piston (4) est inférieure à la fréquence de course du piston (2) .
